Europäisches Patentamt

European Patent Office

Office européen des brevets

(11) Numéro de publication: **0 233 839 B1**

(12) **FASCICULE DE BREVET EUROPEEN**

(45) Date de publication de fascicule du brevet:
27.03.91

(51) Int. Cl.5: **A23L 2/40**

(21) Numéro de dépôt: **87810063.5**

(22) Date de dépôt: **29.01.87**

(54) **Procédé pour la préparation d'une composition pulvérulente hydrosoluble non hygroscopique destinée à la préparation de boissons à dégagement gazeux prolongé.**

(30) Priorité: **11.02.86 CH 543/86**

(43) Date de publication de la demande:
**26.08.87 Bulletin 87/35**

(45) Mention de la délivrance du brevet:
**27.03.91 Bulletin 91/13**

(84) Etats contractants désignés:
**AT BE CH DE ES FR GB IT LI LU NL SE**

(56) Documents cités:
**EP-A- 0 130 144**
**EP-A- 0 185 127**
**GB-A- 1 417 937**
**US-A- 3 082 091**
**US-A- 3 667 962**

(73) Titulaire: **DRIDRINKS N.V.**
**De Ruyterkade 62**
**Curaçao N.A.(NL)**

(72) Inventeur: **Lavie, Louis**
**6 avenue Dapples**
**CH-1006 Lausanne(CH)**

(74) Mandataire: **Vuille, Roman et al**
**c/o KIRKER & Cie S.A. 14, rue du Mont-Blanc**
**Case Postale 872**
**CH-1211 Genève 1(CH)**

Rank Xerox (UK) Business Services

## Description

La présente invention a pour objet un procédé pour la préparation d'une composition pulvérulente hydrosoluble, non hygroscopique, destinée à la préparation de boissons, nutritives ou non nutritives, à dégagement gazeux prolongé.

Le marché des boissons gazeuses, plus particulièrement celui des limonades gazeuses dites "soft drinks" ou "diet drinks", est en progression constante. Sur le plan industriel cependant, son développement se heurte au coût des transports et des manipulations relativement nombreuses d'un produit lourd et volumineux. On tente actuellement de résoudre de tels problèmes en dispersant à l'extrême les centres de production et à ne transporter que des extraits concentrés, à l'état sec ou liquide.

Dans les installations industrielles appropriées, ces extraits sont additionnés d'eau, le cas échéant de sucre, puis de CO2 sous pression élevée, avant d'être conditionnés dans des récipients hermétiques, résistant à la pression, et de ce fait relativement lourds et encombrants. Le caractère "piquant" de ces boissons est alors assuré, entre autres, lors de la consommation, par le dégagement progressif de la dose de CO2 initialement dissoute.

On connaît également des extraits secs pulvérulents à base de bicarbonate de sodium et d'acides comestibles qui, additionnés d'eau juste avant consommation, permettent l'obtention de boissons gazeuses. De tels extraits, cependant, ne permettent pas une gazéification de la boisson comparable par sa durée et son "piquant" à celle résultant de la dissolution de CO2 sous pression. On constate en outre que dans de nombreux cas les ingrédients indispensables à l'effet organoleptique recherché, tels les acides phosphorique et citrique ou le bicarbonate de sodium par exemple, sont particulièrement hygroscopiques et compromettent de ce fait la stabilité des mélanges conditionnés.

Les industries chimiques et pharmaceutiques produisent et utilisent des polymères pour l'enrobage des médicaments. Certains de ces polymères peuvent convenir pour préserver les extraits secs contre les reprises d'humidité et pour contrôler partiellement la réaction entre les acides et les carbonates. N'ayant pas été conçus pour cet usage, ils présentent des inconvénients tels que la coloration des mousses ou des dépôts dans les verres. Le contrôle et l'uniformisation du dégagement de CO2 dans la boisson ne sont en outre que fort imparfaitement maîtrisés.

Dans le domaine des boissons effervescentes, plus particulièrement, certaines solutions ont été déjà proposées. Le brevet US No 2.868.646 préconise l'enrobage de mélanges cristallins d'acides comestibles et de bicarbonates, en présence de fortes proportions de sucre, à l'aide de gommes hydrosolubles. Cette méthode est inadaptée à l'emploi d'acide phosphorique, ainsi qu'à la préparation de boissons dites "diet", pauvres en calories.

Le brevet US No 3.082.091 décrit l'emploi de gommes végétales, de gomme guar en particulier, pour l'enrobage du bicarbonate de sodium. Bien que relativement stable à l'état sec, le bicarbonate ainsi enrobé, une fois mis en présence d'eau et d'acide, ne permet pas d'obtenir un dégagement gazeux contrôlé. Le brevet US No 3.667.962 qui préconise l'emploi de matrices poreuses hydrosolubles, à base de dextrines essentiellement, au sein desquelles acides et carbonates sont dispersés, ne donne pas non plus les effets recherchés.

Les effets les plus remarquables sont obtenus à ce jour à l'aide de la méthode d'enrobage définie dans la demande de brevet EP-A-O13O 144. Les constituants acides et carbonates sont enrobés ou imprégnés chacun à l'aide d'une liqueur à base de polysaccharides macromoléculaires hydrosolubles d'origine végétale, tels la gomme arabique et la gomme adragante. Pour obtenir les qualités recherchées les solutions de polysaccharides macromoléculaires sont préalablement soumises à un traitement thermique modéré, en présence d'alcool éthylique.

La présente invention a pour but l'obtention de résultats comparables sinon supérieurs à ceux obtenus selon les méthode décrite dans EP-A-0 130 144 et EP-020 2193, tout en évitant le traitement préalable des polysaccharides. L'invention a pour objet un procédé pour la préparation d'une composition pulvérulente tel que défini à la revendication 1.

Il a en effet été découvert de façon surprenante, que contrairement aux polysaccharides macromoléculaires hydrosolubles employés jusqu'alors (EP-A-0130144 et EP A-0185123), qui sont tous d'origine végétale, la gomme xanthane présentait des qualités telles que de simples solutions aqueuses de celle-ci permettaient d'obtenir les effets souhaités. Ceci laisse à penser que le mode de précipitation de la gomme xanthane, par addition d'isopropanol à la solution aqueuse résultant du traitement microbiologique entraînerait une modification de son comportement rhéologique en solution, semblable à celui obtenu par traitement des polysaccharides d'origine végétale à l'aide d'alcool éthylique. Il a été constaté, en outre, que ces effets pouvaient être obtenus par l'emploi de quantités de gomme xanthane nettement plus faibles. Il en résulte donc une simplification sensible des opérations d'enrobage.

La gomme xanthane est un polysaccharide exocellulaire d'origine microbiologique, issu de la culture de micro-organismes spécifiques : Xanthomonas campestris. Elle est notamment utilisée comme agent épaississant et stabilisant dans l'industrie alimentaire. Sa production à l'échelle industrielle est parfaitement maîtrisée, tant du point de vue quantitatif que qualitatif. De ce fait, la gomme xanthane présente l'avantage supplémentaire de ne pas être soumise aux aléas des produits d'origine naturelle, dont l'obtention est soumise à l'évolution des conditions climatiques des régions de production, entre autres.

Toutes les dissolutions de gomme xanthane dans l'eau, même à 1%, avec ou sans adjonctions de saccharose forment un gel.

Le procédé selon l'invention permet d'obtenir de façon particulièrement avantageuse une composition pulvérulente dont les constituants sont efficacement protégés contre les reprises d'humidité et qui, une fois additionnée d'eau, permet la préparation d'une boisson gazeuse dont la gazéification, tant par sa durée que son "piquant", est tout à fait comparable à celle obtenue par le moyen des installations industrielles connues à ce jour.

La composition comprend, à titre de premier constituant, un sel ou un mélange de sels d'acide carbonique, tel un carbonate ou un bicarbonate alcalin, un carbonate alcalino-terreux ou un sel d'acide carbonique et d'acide aminé. Elle comprend de préférence du bicarbonate de sodium.

Elle comprend en outre, à titre de second constituant, un acide ou un mélange d'acides organiques, tel l'acide citrique, tartrique, malique ou ascorbique, et/ou un acide minéral tel que l'acide phosphorique.

Conformément au procédé de l'invention, l'imprégnation ou l'enrobage des constituants de la composition s'effectue par le moyen d'une solution aqueuse de gomme xanthane, le cas échéant additionnée de saccharose ou de caramel de sucre. De bons résultats peuvent être obtenus à l'aide de solutions aqueuses à 1 ou 2 % en poids, ces valeurs limites n' étant pas absolues. Ces solutions peuvent être utilisées à raison de 5 à 20 % en poids, de préférence à raison de 10 % environ en poids par rapport aux composés pulvérulents à enrober. Bien entendu, les proportions de solutions et leurs concentrations peuvent varier selon la nature des problèmes rencontrés, être adaptées en conséquence. Etant donné les très faibles quantités de solution d'enrobage utilisées, sucrées et à plus forte raison purement aqueuses, celles-ci conviennent parfaitement à la préparation de compositions de base pour boissons pauvres en calories dites "diet drinks". Pour l'obtention de boissons dites "soft drinks", à contenu sucré plus important, on utilisera, sans restriction aucune, les solutions sucrées d'enrobage.

En ce qui concerne les constituants acides, il suffit que l'imprégnation de ceux-ci permette d'obtenir une bonne protection des produits contre l'hygroscopie et un léger ralentissement de la disolution pour stabiliser le pH en fonction de la durée de la réaction. En ce qui concerne les carbonates, il convient, en plus de la protection contre l'hygroscopie, d'assurer le contrôle de la réaction en fonction du temps de gazéification choisi.

A l'aide desdites solutions, on peut aisément procéder à l'imprégnation de chacun des constituants de la composition soit par mélange sous pression mécanique des produits et de la solution choisis, soit par dissolution dans la quantité d'eau minimum nécessaire, des produits désirés. Les opérations de mélange sous sous pression mécanique peuvent être effectuées à l'aide d'un mortier ou d'un moulin à boules par exemple.

Si désiré on peut en outre incorporer d'autres ingrédients tels que colorants ou ingrédients organoleptiques, par exemple du colorant caramel, des substances édulcorantes naturelles telles que le sucrose, le fructose ou le stevioside (extrait de Stevia rebaudiana Bertoni), des substances édulcorantes synthétiques, telles que la saccharine, les cyclamates ou l'aspartame, des huiles ou des mélanges d'huiles essentielles diverses ou encore des extraits végétaux tels que la caféine, la quinine, le tolu ou l'extrait soluble de noix de cola. Ces ingrédients complémentaires seront alors répartis en fonction de leur affinité avec l'un ou l'autre des éléments réactifs du mélange effervescent.

Dans certains cas, les ingrédients hydrosolubles peuvent être incorporés aux solutions d'enrobage. Dans d'autres, notamment pour ce qui concerne les composants non solubles dans l'eau, ils seront ajoutés séparément, une fois le processus d'enrobage terminé, de préférence adsorbés sur un support solide.

Une fois les ingrédients choisis convenablement enrobés, le produit résultant est alors soumis à dessication et, le cas échéant, réduit en poudre. La dessication peut être convenablement effectuée par chauffage modéré, de 15 à 30°C par exemple, sous vide partiel, par séchage sous vide poussé à basse température, par lyophilisation ou dans un courant d'air chaud, à 40°C par exemple. La dessication sera poursuivie de façon à abaisser la teneur en eau du produit imprégné jusqu'à un maximum de 0,5 à 1% en poids environ.

Si nécessaire, le produit résultant de la dessication est ensuite pulvérisé selon les techniques usuelles, le cas échéant stocké dans l'attente de son utilisation finale.

Les ingrédients sélectionnés peuvent être alors répartis en doses unitaires convenant, après simple addition d'eau, à la préparation de boissons gazeuses.

Certaines des mises en oeuvre de l'invention sont illustrées à l'aide des exemples ci-dessous.

### Exemple 1

On a préparé une solution aqueuse de gomme xanthane (qualité pour aliments-KELTROL T) comme suit :
- 4 g de gomme xanthane en poudre
- 100 g d'eau.

La solution ainsi obtenue a ensuite été utiisée pour l'enrobage du mélange d'acides suivant
- 3 g d'acide phosphorique
- 17 g d'acide citrique anhydre
- 30 g d'acide tartrique moulu

à raison de 2,5g de solution pour 50 g de mélange d'acides. Une fois les ingrédients réduits en une masse homogène, le produit résultant a été séché sur un treillis à fines mailles dans un courant d'air chaud et finalement réduit en poudre dans un mortier. Taux de couverture en gomme : 0,20% en poids.

Ce mélange d'acides peut être ensuite utilisé pour la préparation d'une composition pulvérulente de base pour boisson gazeuse (quantité pour 300 ml) :
- 2 g de bicarbonate de sodium enrobé selon la méthode de l'Exemple 1
- 3 g du mélange d'acides enrobé selon la méthode ci-dessus.

Après addition d'eau froide au mélange ci-dessus, on observe une effervescence gazeuse régulière, sur 35 min. environ.

### Exemple 2

On a préparé une solution aqueuse sucrée de gomme xanthane (qualité pour aliments-KELTROL T) à partir des ingrédients suivants :
- 4 g de gomme xanthane
- 46 g de saccharose moulu
- 100 g d'eau

La solution sucrée ainsi obtenue a été ensuite utilisée pour l'enrcbage du mélange d'acides suivant
- 3 g d'acide phosphorique
- 17 g d'acide citrique anhydre
- 30 g d'acide tartrique moulu

à raison de 2,5 g de solution pour 50 g de mélange d'acides. Une fois les ingrédients réduits en une masse homogène, le produit résultant a été séché sur un treillis à fines mailles dans un courant d'air chaud et finalement réduit en poudre dans un mortier. Taux de couverture en mélange gomme/saccharose : 1,66% en poids.

Le mélange d'acides ainsi enrobé peut être ensuite utilisé pour la préparation d'une composition pulvérulente de base pour boisson gazeuse (quantité pour 300 ml) :
- 2 g de bicarbonate de sodium enrobé selon la méthode de l'Exemple 1
- 3 g du mélange d'acides enrobé selon la méthode ci-dessus.

Après addition d'eau froide au mélange ci-dessus, on observe une effervescence gazeuse régulière, sur 35 min. environ.

## Revendications

1. Procédé pour la preparation d'une composition pulvérulente hydrosoluble, non hygroscopique, destinée à la préparation de boissons à dégagement gazeux prolongé comprenant un premier constituant mélangé à un second constituant réagissant l'un avec l'autre en présence d'eau pour donner un dégagement gazeux, caractérisé en ce qu'on enrobe ou imprègne séparément lesdits constituants à l'aide d'une solution aqueuse de gomme xanthane exempte de tout traitement préalable à l'éthanol à chaud, on sèche ensuite séparément chacun desdits constituants ainsi enrobés ou imprégnés, puis on mélange en proportions prédéterminées les constituants séchés et, le cas échéant, pulvérisés.

2. Procédé selon la revendication 1, caractérisé en ce que la solution aqueuse de gomme xanthane comprend un édulcorant.

3. Procédé selon l'une des revendications 1 et 2, caractérisé en ce que l'enrobage ou l'imprégnation s'effectue par mélange sous pression mécanique. le cas échéant par dissolution des constituants.

4. Procédé selon l'une des revendications 1 à 3, caractérisé en ce que le premier constituant comprend un sel ou un mélange de sels d'acide carbonique tel un carbonate ou un bicarbonate alcalin, un carbonate alcalino-terreux ou un sel d'acide carbonique et d'un acide aminé.

5. Procédé selon l'une des revendication 1 à 4, caractérisé en ce que le second constituant comprend un acide ou un mélange d'acides minéral et/ou organiques, tels l'acide phosphorique, citrique, tartrique, malique ou ascorbique.

6. Procédé selon l'une des revendication 1 à 5, caractérisé en ce que les premier et second constituants, respectivement acides et carbonates, sont utilisés sous forme cristallisée ou amorphe. de préférence amorphe.

## Claims

1. A process for the preparation of a non-hygroscopic water-soluble pulverulent composition for the preparation of drinks which release gas over a prolonged period, said composition comprising a mixture of a first constituent and a second constituent which react with one another in the presence of water to release gas, characterized in that said constituents are separately coated or impregnated with an agueous solution of xanthan gum which has not undergone any prior treatment with ethanol under the action of heat, each of said constituents coated or impregnated in this way is then separately dried and the dried and, if appropriate, powdered constituents are then mixed in predetermined proportions.

2. A process according to Claim 1, characterized in that the agueous solution of xanthan gum comprises a sweetener.

3. A process according to Claim 1 or Claim 2, characterized in that the coating or impregnation is carried out by mixing under mechanical pressure or, if appropriate, by dissolution of the constituents.

4. A process according to any one of Claims 1 to 3, characterized in that the first constituent comprises a carbonic acid salt such as an alkali metal carbonate or bicarbonate, an alkaline earth metal carbonate or a salt of carbonic acid and an amino acid, or a mixture of such salts.

5. A process according to any one of Claims 1 to 4, characterized in that the second constituent comprises a mineral and/or organic acid such as phosphoric, citric, tartaric, malic or ascorbic acid, or a mixture of such acids.

6. A process according to any one of Claims 1 to 5, characterized in that the first and second constituents, namely the carbonates and acids respectively, are used in the crystalline or, preferably, amorphous form.

## Ansprüche

1. Verfahren zur Herstellung einer feinpulverigen, wasserlöslichen nicht-hygroskopischen Verbindung zwecks Herstellung von Getränken mit langzeitiger Gasabgabe, enthaltend einen ersten Bestandteil, der mit einem zweiten Bestandteil vermischt ist, wobei beide in Gegenwart von Wasser zwecks Gasabgabe miteinander reagieren, dadurch gekennzeichnet, dass die erwähnten Bestandteile mit Hilfe einer wässrigen Xanthangummilösung getrennt umhüllt oder imprägniert werden und wobei diese Lösung keine Äthanolwarmvorbehandlung erfahren hat, anschliessend jeder so umhüllte oder imprägnierte Bestandteil getrocknet wird, und dann die getrockneten Bestandteile in vorgegebenen Verhältnissen gemischt und eventuell pulverisiert werden.

2. Verfahren nach Patentanspruch 1, dadurch gekennzeichnet, dass die wässrige Xanthangummilösung einen Süssstoff enthält.

3. Verfahren nach einem der Patentansprüche 1 und 2, dadurch gekennzeichnet, dass das Umhüllen oder Imprägnieren durch Mischen unter Druck oder gegebenenfalls durch Auflösen der Bestandteile erfolgt.

4. Verfahren nach einem der Patentansprüche 1 bis 3, dadurch gekennzeichnet, dass der erste Bestandteil aus einem Salz oder aus einem Gemisch von Salzen der Kohlensäure besteht, wie beispielsweise aus einem Karbonat oder einem alkalischen Karbonat oder einem Kohlesäuresalz und einem Aminosäurensalz.

5. Verfahren nach einem der Patentansprüche 1 bis 4, dadurch gekennzeichnet, dass der zweite Bestandteil eine Säure oder ein Gemisch von mineralischen und/oder organischen Säuren enthält, wie beispielsweise von Phosphorsäure, von Zitronensäure, von Weinsäure, von Hydroxybernsteinsäure oder von Ascorbinsäure.

6. Verfahren nach einem der Patentansprüche 1 bis 5, dadurch gekennzeichnet, dass der erste und zweite Bestandteil beziehungsweise Säuren und Karbonate in kristalliner oder amorpher Form, vorzugsweise amorpher Form verwendet werden.